# EUROPEAN PATENT APPLICATION

(11) **EP 2 871 221 A1**
(43) Date of publication of application: **13.05.2015**
(21) Application number: 13812741.0
(22) Date of filing: 27.06.2013
(51) Int. Cl.: C09K 3/14, F16D 69/02

(54) **FRICTION MATERIAL**

(30) Priority: 04.07.2012 JP 2012150507
(71) Applicant: Nisshinbo Brake Inc., Chuo-ku Tokyo 103-8650 (JP)
(72) Inventor: YAMAMOTO Kazuhide, Oura-gun Gunma 370-0614 (JP); MATSUZAWA Takuya, Oura-gun Gunma 370-0614 (JP); KOBAYASHI Mitsuru, Oura-gun Gunma 370-0614 (JP)
(74) Representative: Isarpatent
(86) International application number: PCT/JP2013/067614
(87) International publication number: WO 2014/007130

(57) **Abstract**

[Object]

To provide the friction material comprising the fiber base, the binder, and the friction modifier and being produced by forming the NAO friction material composition containing at least one type of material that elutes the sulfate ion, which secures the preferable wear resistance and restricts seizure due to corrosion.

[Means to Resolve]

The friction material composition contains a hydrophilic activated carbon as the friction modifier. The hydrophilic activated carbon has an average particle diameter of 80-200µm and an amount thereof is 0.4-5.0 weight % relative to the total amount of the friction material composition. Also, the friction material composition contains 8-12 weight % of a hydrophilic phenolic resin as the binder relative to the total amount of the friction material composition.

## Description

### [Field of Invention]

This invention relates to a friction material using automotive disc brake pads and brake shoes.

### [Background of the Invention]

Conventionally, a disc brake and a drum brake are utilized as the automotive brake device, and disc brake pads and brake shoes made by fixing the friction material on a base member made of metal such as steel are utilized as a friction member of the brake device.

The friction material is classified into a semi-metallic friction material containing, as a fiber base, 30 weight % or more but less than 60 weight % of a steel fiber relative to the total amount of the friction material composition, a low steel friction material containing a steel fiber in a part of the fiber base as well as less than 30 weight % of the steel fiber relative to the total amount of the friction material composition, and Non-Asbestos-Organic (NAO) material containing no steel-based fiber such as the steel fiber and a stainless steel fiber.

The friction material generating less braking noise is demanded in late years, it is a current trend to use the friction material member that uses the NAO friction material that does not contain the steel fiber and steel-based fiber but mainly contains a fiber base such as a nonmetallic fiber, an organic fiber, and an inorganic fiber, a binder such as a thermosetting resin, and a friction modifier such as an organic filler, an inorganic filler, an inorganic abrasive, a lubricant, and a metallic particle.

In order to maintain the fundamental performance of the NAO friction material, a cashew dust as the organic filler and a barium sulfate as the inorganic filler have been widely used; however, these materials may elute the sulfate ion which is a cause of rusting in the presence of water, thereby tending to cause rusting on a disc rotor as a mating member of the friction material of the disc brake, and brake drum as a mating member of the friction material of the drum brake.

Especially when the above described NAO friction material is used for the disc brake and the drum brake equipped with a parking mechanism, after a while applying the parking brake, there is a problem that an adhesion between the friction material and the mating member such as the disc rotor and the brake drum because of the rust or seizure due to corrosion is tend to occur.

In order to prevent the seizure due to corrosion, alkaline metal salts are often added to the friction material as a pH adjusting agent.

The Patent Document 1 discloses the friction material produced by the heat press forming the friction material composition containing 0.2-5.0 weight % of the alkaline metal salts relative to the total amount of friction material composition.

However, the alkaline metal salts have deliquescent, thereby needing strict stock management; therefore, disadvantage in cost exists.

On the other hand, there is a demand of the friction material that provides a performance of reducing the friction coefficient due to the gas generated during the fade phenomenon, requiring the fade resistance performance. The Patent Document 2 discloses the friction material that contains the filler, the binder of the resin, the fiber reinforcement material, and the friction modifier, in which the reduction of the friction coefficient due to the gas generated during the fade phenomenon is controlled by involving particles containing activated carbon particles with the average particle diameter of about 2mm as the above-filler, while providing a sufficient braking force. Yet, the Patent Document 2 does not mention about the problem of the seizure due to corrosion.

### [Prior Arts]

### [Patent Documents]

[Patent Document 1] Provisional Patent Publication No. 2001-107027
[Patent Document 2] Provisional Patent Publication No. 2009-029954

### [Summary of Invention]

### [Problems to be Resolved by the Invention]

To provide the friction material comprising the fiber base, the binder, and the friction modifier that is produced by forming the NAO friction material composition containing at least one type of material that elute the sulfate ion, which secures a preferable wear resistance and restricts the seizure due to corrosion.

### [Means to Resolve the Problems]

In order to restrict the seizure due to corrosion, under the theory that it is effective to add the material that adsorbs the sulfate ion and the water causing the rust, inventors focused on porous materials normally used as an adsorbent.

The activated carbon among the porous materials has a character of adsorbing many materials in the minute pores and is excellent in adsorbing the gas generated during the fade phenomenon and the ions such as the nitrate ion, and the sulfate ion.

However, the activated carbon surface is nonpolar and has a character of not adsorbing a polar molecule with low molecular weight such as water. Accordingly, no seizure due to corrosion restriction effect can be seen in the friction material obtained by arranging such activated carbon in the friction material composition.

On the other hand, a hydrophilic activated carbon is known to be hydrophilic by reforming the surface by acidizing with hydrochloric acid , sulfuric acid or the like. The hydrophilic activated carbon has an excellent water adsorbing effect but the surface thereof is acidic and is considered they facilitate the rust of the mating member, and therefore the hydrophilic activated carbon has not been used for the friction material.

However, when the hydrophilic activated carbon, which was considered to rust the mating member, was added to the friction material components, the hydrophilic activated carbon was found to adsorb the sulfate ion and water sufficiently and to restrict the seizure due to corrosion.

This invention relates to the friction material comprising the fiber base, the binder, and the friction modifier that is produced by forming the NAO friction material composition containing at least one type of material that elutes the sulfate ion, in which the predetermined amount of the hydrophilic activated carbon is contained in the friction modifier and the following technology is considered as the basis of this invention.
(1) The friction material which is characterized to comprise the fiber base, the binder, and the friction modifier and to be produced by forming the NAO friction material composition at least containing one type of material that elutes the sulfate ion, in which the friction modifier contains the hydrophilic activated carbon.
(2) The friction material as described in the above (1), in which the friction material composition containing 0.4-5.0 weight % of said hydrophilic activated carbon relative to the total amount of the friction material composition.
(3) The friction material as described in the above (1) or (2), in which said hydrophilic activated carbon has the average particle diameter of 80-200µm.
(4) The friction material as described in one of the above (1)-(3), in which the friction material composition containing 8-12 weight % of the hydrophilic phenolic resin as the binder of relative to the total amount of the friction material composition.

### [Advantages of the Invention]

According to this invention, this invention provides the friction material comprising the fiber base, the binder, and the friction modifier and that is produced by forming the NAO friction material composition at least containing one type of material that elutes the sulfate ion, which secures excellent wear resistance and restricts the seizure due to corrosion.

### [Brief Description of the Drawings]

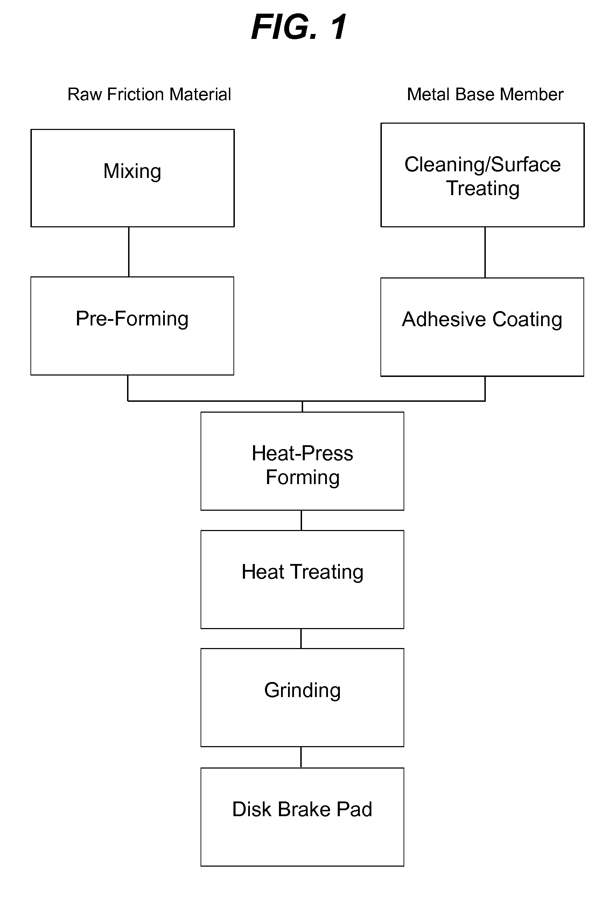

[FIG. 1] FIG. 1 is a view showing one example of the manufacturing process of the disc brake pad employing the friction material of this invention.

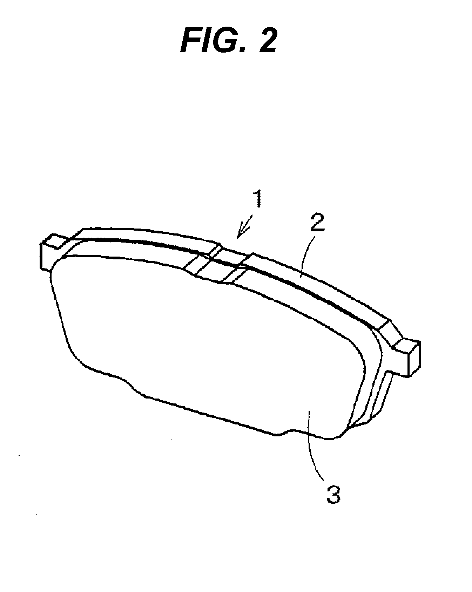

[FIG. 2] FIG. 2 is a perspective view of one example of the disc brake pad employing the friction material of this invention.

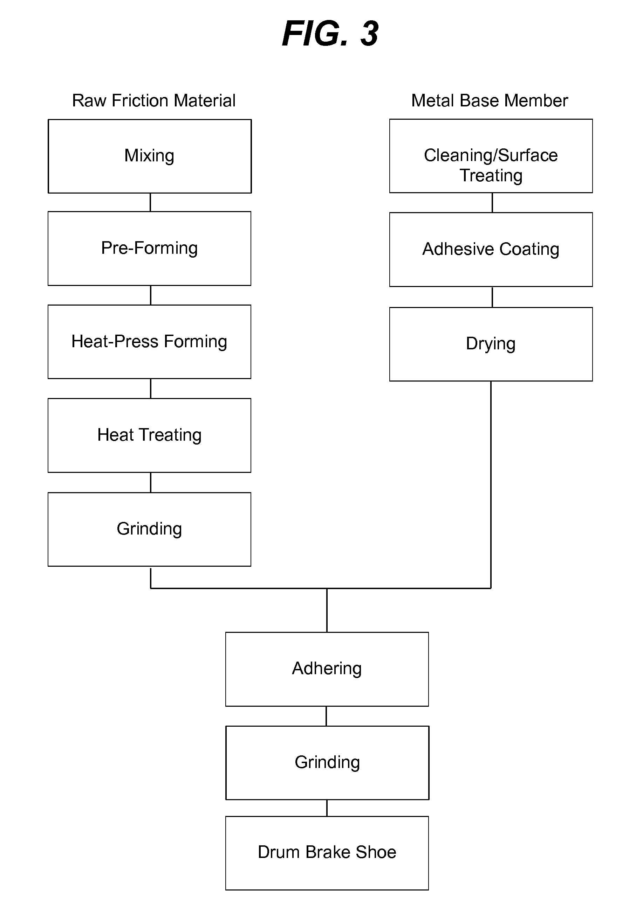

[FIG. 3] FIG. 3 is a view showing one example of the manufacturing process of the brake shoe employing the friction material of this invention.

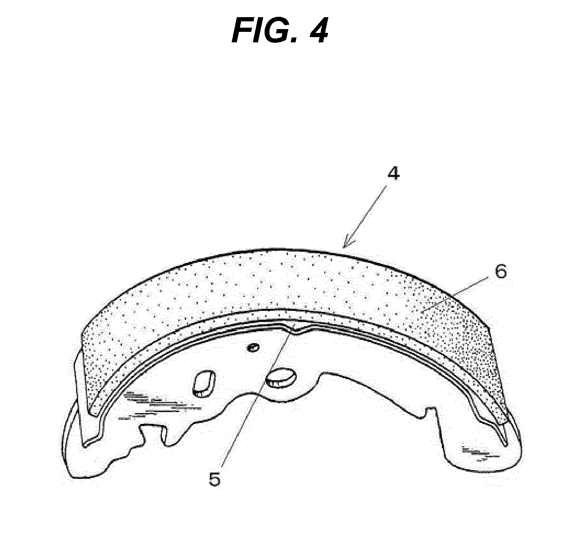

[FIG. 4] FIG. perspective view of one example of the disc brake shoe employing the friction material of this invention.

### [Embodiments of the Invention]

In this invention, the friction material comprising the fiber base, the binder, and the friction modifier and is produced by forming the NAO friction material component containing the hydrophilic activated carbon in the friction modifier.

The hydrophilic activated carbon is such that the activated carbon is treated with the hydrochloric acid and sulfuric acid to form an oxide on the surface. The hydrophilic activated carbon is preferably added to be 0.4-5.0 weight % relative to the total amount of the friction material composition.

If 0.4 weight % or more of the hydrophilic activated carbon relative to the total amount of the friction material component is added, the seizure due to corrosion can sufficiently be restricted, and if 5.0 weight % or less of the hydrophilic activated carbon relative to the total amount of the friction material component is added, the necessary wear resistance effect can be secured.

The average particle diameter of the hydrophilic activated carbon is preferably 80-200µm.

Within this range, the seizure due to corrosion restriction effect increases and excellent wear resistance effect can be obtained.

Furthermore, as the binder, 8-12 weight % of the hydrophilic phenolic resin relative to the total amount of the friction material composition is added.

If 8-12 weight % of the hydrophilic phenolic resin relative to the total amount of the friction material composition is added, the seizure due to corrosion restriction effect can be improved.

As the hydrophilic phenolic resin, such as a straight phenolic resin, and/or a phenolic resin modified by the hydrophilic elastomer such as NBR or an acryl rubber can be used.

The phenolic resin modified by silicone or the phenolic resin in which the fluorine polymer is dispersed have water repellency and therefore when the abrasion dust is adsorbed to the activated carbon, the activated carbon becomes hardly adsorb the water and further improvement on the seizure due to corrosion restriction effect cannot be expected.

Also, other than said hydrophilic activated carbon and said hydrophilic phenolic resin, the friction material of this invention has a friction material component comprising a fiber base such as a metal fiber, an organic fiber, and an inorganic fiber, the binder such as the thermosetting resin, and the friction modifier such as the organic filler, the inorganic filler, the inorganic abrasive, lubricant, and the metal particles. These materials are normally used in the friction material.

As the fiber base, a non-steel-based metal fiber such as a copper fiber and a brass fiber, an organic fiber such as an aramid fiber and an acryl fiber, and an inorganic fiber such as a carbon fiber, a ceramic fiber, and a rock wool are provided. The content of the fiber base is preferably ranged 5-20 weight % relative to the total amount of the friction material composition in order to secure the sufficient mechanical strength.

As the binder, a phenolic resin, a phenolic resin modified by cashew oil, silicone oil, and/or various elastomers, and the phenolic resin in which various elastomers and/or the fluorine polymer is dispersed can be used.

The content of the binder is preferably 9-15 weight % relative to the total amount of the friction material component to secure sufficient mechanical strength and wear resistance. In order to improve the water adsorption effect of the activated carbon, 8-12 weight % of straight phenolic resin, phenolic resin modified by hydrophilic elastomer such as NBR and/or an acryl rubber, relative to the total amount of the friction material component is preferably contained therein.

As friction modifier without above-mentioned hydrophilic activated carbon, organic fillers such as cashew dust, pulverized powder of tire tread rubber, various vulcanized rubber powder, and various vulcanized rubber powder; inorganic fillers such as barium sulfate, calcium hydroxide, vermiculite, and mica; inorganic abrasives such as iron oxide, aluminum oxide, zirconium silicate, and magnesium oxide; lubricants such as graphite, coke, and metal sulfide, and metal particles such as tin particles and zinc particles may be used. The content of the friction modifier is preferably 60-90 weight % relative to the total amount of the friction material component in consideration of the desired friction characteristics.

These fiber base, binder, and friction modifier are arranged in response to the needing of the desirable quality, mechanical strength, and friction wear characteristics.

The friction material of this invention is manufactured through a mixing step to evenly mix said hydrophilic activated carbon, fiber base, binder, and friction modifier arranged in the predetermined amount using a mixer, a pre-forming step to produce an unfinished pre-form by placing the obtained raw friction material mixture into a pre-forming die to press the same, a heat pressure molding step to place the obtained unfinished pre-form into the heat forming die to heat press form the same, a heat treatment step (postcuring step) to heat the obtained molded article to complete the curing of the binder, and a grinding step to form the friction surface.

As necessary, prior to the pre-forming step, a granulating step to granulate the raw friction material mixture may be performed and after the heat pressure molding step, a coating step, a coat baking step, and a scorching step may be performed.

To manufacture the disc brake pad, in the heat pressure molding step, the forming step is performed while superposing a cleaned, surface treated, adhesive applied metal back plate (e.g., steel back plate) and the above described raw friction material mixture or the granulated substance and the pre-form.

### [Embodiment]

Embodiments and Comparative Examples of this invention will be shown in the following section to explain this invention concretely; however, this invention should not be limited to the Embodiments and Comparative Examples in the section below.

### [Embodiments 1-11 / Comparative Example 1 - Manufacturing Method for Friction Material]

The friction material composition with the contents shown in the TABLE 1 and TABLE 2 are mixed with the Loedige Mixer for 5 minutes and pressed in the pre-forming die at 30MPa for 1 minute to obtain the pre-form.

The obtained pre-form is superposed on the cleaned, surface treated, and adhesive applied back plate, heat pressure molded in the heat molding die at 30MPa at 150°C for 6 minutes, heat treated (postcured) at 200°C for 4 hours, and grinded to produce the brake pad for automobile (according to the Embodiments 1-11 and Comparative Example 1). The seizure due to corrosion and wear resistance of the disc brake pads was evaluated under the following conditions. The result of the evaluation will be shown in the TABLE 1 and TABLE 2.

### <Evaluation>

### <Seizure due to corrosion>

According to JIS D4414, "Test Procedure of Seizure to Ferrous Mating Surface Due to Corrosion", the test procedure was processed to evaluate the seizure due to corrosion under the following standard.
⊚ : less than 50N
○: 50N or more but less than 150N
Δ: 150N or more but less than 250N
×: 250N or more

### <Wear Resistance>

According to JASO C427, "Automobile Parts - Brake Lining and Disc Brake Pad - Wear Test Procedure on Inertia Dynamometer", the abrasion amount (mm) of the friction material was measured at initial speed braking of 50km/h, braking deceleration of 0.3G, suitable braking frequency, pre-braking temperature of 100°C, 200°C, 300°C, and 400°C to evaluate according to the following standard after converting into the wear amount per 1000 braking frequency.

⊚ : less than 0.15
○: 0.15 or more but less than 0.20
Δ: 0.20 or more but less than 0.25
×: 0.25 or more

[TABLE 1]
Drawing No. 000003

**TABLE 1**

| | | Embodiments | | | | | |
|---|---|---|---|---|---|---|---|
| | | 1 | 2 | 3 | 4 | 5 | 6 |
| Binder | Straight Phenolic Resin | 5 | 5 | 5 | 5 | 5 | 5 |
| | Acryl Rubber-Modified Phenolic Resin | 5 | 5 | 5 | 5 | 5 | 5 |
| | Silicone-Modified Phenolic Resin | 0 | 0 | 0 | 0 | 0 | 0 |
| Fiber Base | Aramid Fiber | 7 | 7 | 7 | 7 | 7 | 7 |
| Friction Modifier | Activated Carbon (hydrochloric acid treatment) 50µm | 1 | 0 | 0 | 0 | 0 | 0 |
| | Activated Carbon (hydrochloric acid treatment) 80µm | 0 | 1 | 0 | 0 | 0 | 0 |
| | Activated Carbon (hydrochloric acid treatment) 150µm | 0 | 0 | 1 | 0 | 0 | 0.4 |
| | Activated Carbon (hydrochloric acid treatment) 200µm | 0 | 0 | 0 | 1 | 0 | 0 |
| | Activated Carbon (hydrochloric acid treatment) 300µm | 0 | 0 | 0 | 0 | 1 | 0 |
| | Activated Carbon (hydrochloric acid treatment) 150µm | 0 | 0 | 0 | 0 | 0 | 0 |
| | Squamous Shaped Potassium Hexatitanate | 29 | 29 | 29 | 29 | 29 | 29 |
| | Zirconium Silicate | 2 | 2 | 2 | 2 | 2 | 2 |
| | Zirconium Oxide | 5 | 5 | 5 | 5 | 5 | 5 |
| | Mica | 3 | 3 | 3 | 3 | 3 | 3 |
| | Magnetite | 5 | 5 | 5 | 5 | 5 | 5 |
| | Cokes | 3 | 3 | 3 | 3 | 3 | 3 |
| | Zinc Sulfide | 2 | 2 | 2 | 2 | 2 | 2 |
| | Calcium Hydroxide | 2 | 2 | 2 | 2 | 2 | 2 |
| | Barium Sulfate | 24 | 24 | 24 | 24 | 24 | 24.6 |
| | Hydrous Magnesium Silicate | 2 | 2 | 2 | 2 | 2 | 2 |
| | Pulverized Powder of Tire Tread Rubber | 2 | 2 | 2 | 2 | 2 | 2 |
| | Cashew Dust | 3 | 3 | 3 | 3 | 3 | 3 |
| Total (Weight %) | | 100 | 100 | 100 | 100 | 100 | 100 |
| Evaluation | Seizure Due to Corrosion | Δ | ○ | ⊚ | ⊚ | ⊚ | ○ |
| | Wear Resistance | ⊚ | ⊚ | ⊚ | O | Δ | ⊚ |

[TABLE 2]
Drawing No. 000004

**TABLE 2**

| | | Embodiments | | | | | CE |
|---|---|---|---|---|---|---|---|
| | | 7 | 8 | 9 | 10 | 11 | 1 |
| Binder | Straight Phenolic Resin | 5 | 5 | 5 | 5 | 8 | 5 |
| | Acryl Rubber-Modified Phenolic Resin | 5 | 5 | 5 | 0 | 0 | 5 |
| | Silicone-Modified Phenolic Resin | 0 | 0 | 0 | 5 | 2 | 0 |
| Fiber Base | Aramid Fiber | 7 | 7 | 7 | 7 | 7 | 7 |
| Friction Modifier | Activated Carbon (hydrochloric acid treatment) 50µm | 0 | 0 | 0 | 0 | 0 | 0 |
| | Activated Carbon (hydrochloric acid treatment) 80µm | 0 | 0 | 0 | 0 | 0 | 0 |
| | Activated Carbon (hydrochloric acid treatment) 150µm | 5 | 0.2 | 6 | 1 | 1 | 0 |
| | Activated Carbon (hydrochloric acid treatment) 200µm | 0 | 0 | 0 | 0 | 0 | 0 |
| | Activated Carbon (hydrochloric acid treatment) 300µm | 0 | 0 | 0 | 0 | 0 | 0 |
| | Activated Carbon (hydrochloric acid treatment) 150µm | 0 | 0 | 0 | 0 | 0 | 1 |
| | Squamous Shaped Potassium Hexatitanate | 29 | 29 | 29 | 29 | 29 | 29 |
| | Zirconium Silicate | 2 | 2 | 2 | 2 | 2 | 2 |
| | Zirconium Oxide | 5 | 5 | 5 | 5 | 5 | 5 |
| | Mica | 3 | 3 | 3 | 3 | 3 | 3 |
| | Magnetite | 5 | 5 | 5 | 5 | 5 | 5 |
| | Cokes | 3 | 3 | 3 | 3 | 3 | 3 |
| | Zinc Sulfide | 2 | 2 | 2 | 2 | 2 | 2 |
| | Calcium Hydroxide | 2 | 2 | 2 | 2 | 2 | 2 |
| | Barium Sulfate | 20 | 24. 8 | 19 | 24 | 24 | 24 |
| | Hydrous Magnesium Silicate | 2 | 2 | 2 | 2 | 2 | 2 |
| | Pulverized Powder of Tire Tread Rubber | 2 | 2 | 2 | 2 | 2 | 2 |
| | Cashew Dust | 3 | 3 | 3 | 3 | 3 | 3 |
| Total (Weight %) | | 100 | 100 | 100 | 100 | 100 | 100 |
| Evaluation | Seizure Due to Corrosion | ⊚ | Δ | ⊚ | Δ | ○ | × |
| | Wear Resistance | ○ | ⊚ | Δ | ⊚ | ⊚ | ⊚ |

According to the TABLE 1 and TABLE 2, in the NAO friction material, by involving the hydrophilic activated carbon in a portion of the friction modifier, it seems that the seizure due to corrosion can be restricted. In addition, the wear resistance is not hindered, which is preferable.

### [Industrial Applicability]

According to this invention, the friction material, comprising the fiber base, the binder, and the friction modifier and being produced by forming the NAO friction material composition containing at least one type of the material that elutes the sulfate ion, can secure the excellent wear resistance and restrict the seizure due to corrosion, which provides excellent practical advantage as the friction material for the disc brake or the drum brake.

### [Explanation of Reference No.]

1. Disc brake pad
2. Back plate
3. Friction material
4. Brake shoe
5. Brake shoe body
6. Friction material (lining)
[FIG. 1]
Figure No.: 000005
[FIG. 2]
Figure No.: 000006
[FIG. 3]
Figure No.: 000007
[FIG. 4]
Figure No.: 000008

## Claims

1. A friction material comprising a fiber base, a binder, and a friction modifier, which is produced by forming a Non-Asbestos-Organic (NAO) friction material composition containing at least one type of material that elutes a sulfate ion, wherein the friction material composition contains a hydrophilic activated carbon as the friction modifier.

2. The friction material according to Claim 1, wherein the friction material composition contains 0.4-5.0 weight % of the hydrophilic activated carbon relative to the total amount of the friction material composition.

3. The friction material according Claim 1 or Claim 2, wherein the hydrophilic activated carbon has an average particle diameter of 80-200µm.

4. The friction material according to Claims 1-3, wherein the friction material composition contains 8-12 weight % of the hydrophilic phenolic resin relative to the total amount of the friction material composition.
